# FASCICULE DE BREVET EUROPEEN

(11) **EP 4 622 808 B1**
(45) Date de publication et mention de la délivrance du brevet: **04.11.2026**
(21) Numéro de dépôt: 23804715.3
(22) Date de dépôt: 15.11.2023
(51) Int. Cl.: B60C 23/04

(54) **DISPOSITIF DE FIXATION A UNE ENVELOPPE PNEUMATIQUE D'UN ORGANE ELECTRONIQUE**
VORRICHTUNG ZUR BEFESTIGUNG EINES ELEKTRONISCHEN ELEMENTS AN EINER REIFENKARKASSE
DEVICE FOR SECURING AN ELECTRONIC MEMBER TO A TYRE CASING

(30) Priorité: 25.11.2022 FR 2212333
(43) Date de publication de la demande: 01.10.2025
(73) Titulaire: COMPAGNIE GENERALE DES ETABLISSEMENTS MICHELIN, 63000 Clermont-Ferrand (FR)
(72) Inventeur: BERLIOUX, Loic, 63040 CLERMONT-FERRAND CEDEX 09 (FR); CARTERON, Francis, 63040 CLERMONT-FERRAND CEDEX 09 (FR)
(74) Mandataire: M.F.P. Michelin
(86) Numéro de dépôt international: PCT/EP2023/081845
(87) Numéro de publication internationale: WO 2024/110271

(56) Documents cités:
- EP-A1- 3 192 668
- EP-A1- 3 603 996
- EP-A1- 3 763 552
- WO-A1-2015/019283
- DE-A1- 102007 030 231
- DE-A1- 102007 030 232
- DE-T2- 69 831 117

## Description

### Domaine de l'invention

La présente invention concerne les dispositifs de fixation à une enveloppe pneumatique d'un organe électronique dans le but de véhiculer des informations d'identification sur l'enveloppe pneumatique ou des paramètres physiques de l'enveloppe pneumatique mesurés par l'organe électronique au cours de la vie de l'enveloppe pneumatique.

### Arrière-plan technologique

Le développement des objets électroniques dans les enveloppes pneumatiques permet de rendre connectables et connectées les enveloppes pneumatiques, ce qui provoque le développement de nouveaux services afin d'optimiser, par exemple, l'usage de l'enveloppe pneumatique. Or ces organes électroniques comportent parfois des composants fragiles thermo mécaniquement ce qui nécessite d'introduire l'organe électronique en post fabrication de l'enveloppe pneumatique. Ainsi, l'introduction d'un dispositif de fixation comme interface entre l'organe électronique et le pneumatique a émergé. Ces dispositifs de fixation sont généralement élastiques pour ne pas contraindre fortement l'enveloppe pneumatique, pour suivre les fortes déformations subies par l'enveloppe pneumatique au cours de son usage et pour amortir les sollicitations transmises à l'organe électronique. L'une des conceptions de dispositif les plus usuellement employées est un patch présentant une semelle servant de fixation à l'enveloppe pneumatique et muni d'une paroi fermée sur elle-même s'étendant depuis la semelle jusqu'à une ouverture. La paroi sert à saisir ou maintenir l'organe électronique en position au sein du dispositif, l'organe électronique étant monté serré à l'intérieur de la paroi qui se déforme élastiquement. L'ouverture autorise l'insertion et l'extraction de l'organe électronique du patch grâce à l'élasticité du matériau de l'ouverture

Le document WO2018/150141A1 illustre un patch de cette nature. Bien que ce patch présente spécifiquement un système de serrage afin de limiter l'ouverture, il est en tout point conforme à un patch de fixation à une enveloppe pneumatique d'un objet électronique. Et, ce type de patch présente parfois une problématique de tenue mécanique du système comprenant le patch et l'organe électronique au cours de l'usage de l'enveloppe pneumatique sur lequel ce système est fixé, notamment lorsque le patch, avec ou sans électronique, est fixé sur le pneumatique en post cuisson de l'enveloppe pneumatique par l'intermédiaire d'une colle de liaison.

Le document WO 2015/019283 A1 montre un dispositif de fixation d'un organe électronique étant aussi pertinent pour comprendre l'invention.

Les objets de l'invention qui vont suivre ont pour objectif de résoudre les problèmes de tenue mécanique en endurance du patch de fixation qui soit à la fois économique, fiable et sans impact sur le fonctionnement de l'organe électronique accueilli au sein du patch de fixation.

### Description de l'invention

L'invention porte sur un dispositif de fixation à une paroi d'une enveloppe pneumatique d'un organe électronique comprenant :
- une semelle apte à être fixée à la paroi de l'enveloppe pneumatique par l'intermédiaire d'une surface externe ;
- une paroi de maintien fermée, apte à retenir le dit organe électronique, s'étendant depuis la semelle jusqu'à un bord libre et définissant avec ladite semelle un volume ouvert ;
- le volume, apte à accueillir au moins une partie dudit organe électronique, étant défini par une surface interne de ladite semelle et par ladite paroi de maintien, présentant une ouverture délimitée par le bord libre de ladite paroi de maintien, apte à se déformer pour introduire ou extraire ledit organe électronique dudit volume ;
- la surface externe de ladite semelle comprenant un réseau homogène d'éléments en creux et d'éléments en saillie définissant une variation maximale de hauteur comprise entre 10 µm et 200 µm ; et
le dispositif de fixation est caractérisé en ce que l'agencement du réseau des éléments en creux et des éléments en saillie est concentrique autour d'un unique point de la surface externe de la semelle ou sous forme d'un damier dont les carreaux adjacents deux à deux sont un élément en creux et un élément en saillie.

Le dispositif de fixation présente, par l'intermédiaire du réseau d'éléments en creux et d'éléments en saillie, un volume qui servira de réserve pour accueillir un produit de type colle au moment de la fixation de ce dispositif sur la paroi de l 'enveloppe pneumatique. On entend ici par le terme « homogène » sur les éléments de creux et les éléments en saillie sont distribués de façon uniforme sur la surface externe de la semelle. Ainsi, on assure de répartir de façon uniforme la réserve de colle de qui sera appliquée sur la surface externe de la semelle au moment de la fixation de celle-ci sur la paroi interne du pneumatique. Même si un contact est effectué directement entre la surface externe de la semelle et la paroi interne de l'enveloppe pneumatique, le réseau assure au niveau des éléments en creux, la présence de colle entre la surface externe de la semelle et la paroi interne de l'enveloppe pneumatique. En assurant une hauteur minimale entre le fond de la semelle et un plan d'appui de la semelle, on garantit une certaine épaisseur de colle au travers de l'ensemble du réseau uniformément répartie sur la totalité de la surface externe de la semelle, ce qui permet de contrôler cette épaisseur moyenne de colle. Selon la nature de la colle et du mode de rupture de la fixation qui est souhaitée le réseau permet de mettre sous contrôle l'épaisseur souhaitée. En effet, la rupture de la fixation est soit une rupture à l'interface entre, d'une part, la colle et d'autre part l'un des éléments parmi la semelle ou la paroi interne de l'enveloppe pneumatique. Cette rupture de la fixation peut aussi être la décohésion de la structure interne de la colle elle-même selon le type de sollicitations subi par la colle. Cette décohésion de la structure de la colle est pilotée, pour certains produits, par l'épaisseur du film de colle. Ainsi, lors de l'opération de collage du dispositif de fixation sur la paroi interne de l'enveloppe pneumatique, le réseau d'éléments en creux et d'éléments en saillie garantit le lieu, la nature de la rupture et le seuil à partir duquel la rupture est opérée.

Dans un premier mode de réalisation du réseau homogène, le réseau est construit par des éléments en saillie régulièrement espacé des uns des autres de façon radiale par un creux. Ces éléments sont des formes cylindriques qui sont concentriques autour d'un même point de la surface externe suivant un axe perpendiculaire à la surface externe de la semelle. Ces éléments cylindriques ont par exemple une section de type cercle ou ellipse. Ce mode de réalisation du réseau homogène de creux est bien adapté pour une réalisation au travers d'un moulage du dispositif de fixation bien que d'autres procédés puissent être employés. En effet, il suffit de réaliser sur la matrice du moule définissant la surface externe de la semelle, l'empreinte du réseau homogène concentrique pour que celui-ci se réalise en même temps que la fabrication du dispositif de fixation. Cela a pour avantage de rendre solidaire les éléments en saillie du réseau avec la semelle du dispositif de fixation. De plus, le dispositif final avec son réseau homogène est facilement démoulable en raison de la concentricité de ces éléments, même en ce qui concerne la rainure externe. De plus le procédé de moulage assure une répétabilité du réseau homogène et ceci à moindre coût de fabrication. Cependant, cette technique est adaptée pour un volume de creux résiduel au niveau du dispositif de fixation qui soit assez élevé, ce qui est parfaitement bien adapté à certains types de colle.

Dans un second mode de réalisation du réseau homogène, le réseau comprend un damier dont les cases correspondent alternativement à un élément en saillie et un élément en creux. Préférentiellement, ce damier est défini selon deux directions orthogonales, mais il suffit que les deux directions forment un angle de 30 degrés entre elles pour que cela puisse être suffisamment efficace, notamment pour le nettoyage de la surface avant encollage de celle-ci.

Ce damier est réalisé avantageusement après la fabrication du patch de fixation, généralement obtenu par un procédé de moulage. Il peut s'agir d'un procédé chimique après application d'un agent activateur au travers d'un pochoir positionné sur la surface externe de la semelle. L'application d'un réactif sur l'ensemble de la surface externe de la semelle met alors en relief le damier prédéfini par la forme du pochoir. Il peut aussi s'agir d'un procédé mécanique où une brosse avec des rangées régulièrement espacés de poils rigides est frotté selon deux directions bien contrôlées sur la surface externe de la semelle. Après l'étape de réalisation du damier, il convient de nettoyer la surface externe de la semelle afin d'éliminer les résidus de matière et de rendre la surface externe de semelle inerte chimiquement avant l'application de la colle. Enfin, il peut s'agir d'un traitement thermique par l'intermédiaire d'un laser dont le faisceau décrit une succession de lignes droites espacés l'une de l'autre d'une certaine distance constituant la largeur des éléments en sillons. Le passage du laser selon deux directions sécantes générant alors un damier homogène de cases en creux et de cases en saillie. Ce dernier procédé permet de réaliser les creux de petites dimensions aussi bien en profondeur qu'en largeur.

Avantageusement la largeur des éléments en creux entre deux éléments en saillie est comprise entre 500 µm et 1500 µm.

En dehors du volume global de colle pouvant être distribué de façon homogène au niveau de la surface externe de la semelle, il faut aussi se prévenir au niveau de chaque plot de colle que le mode de rupture est contrôlé afin de ne pas entrainer une rupture progressive de la fixation globale de la semelle par un affaiblissement rencontrés par quelques plots entrainant un report de sollicitation sur les autres plots conduisant à la ruine de la fixation globale de la semelle sur la paroi interne de l'enveloppe pneumatique.

Or la tenue mécanique de ce plot est pilotée, d'une part par la variation moyenne de hauteur entre le fond des éléments de creux et le sommet des éléments en saillie et d'autre part par la distance séparant deux éléments en saillie ce qui correspond à la largeur de l'élément de creux. En contrôlant ce second paramètre, on assure que le dimensionnement de chaque plot de colle est satisfaisant pour garantir la tenue mécanique du plot individuellement. Selon la nature de la colle employée pour la fixation du dispositif de fixation sur la paroi interne de l'enveloppe pneumatique et le type de rupture souhaitée de cette fixation, la largeur requise peut évoluer.

Très avantageusement, le contour de la surface externe de la semelle comprend une saillie dont la hauteur est inférieure ou égale à la hauteur maximale des éléments en saillie du réseau homogène de la surface externe de la semelle.

La présence de cette saillie localisée sur le contour de la surface externe de la semelle sert à empêcher la colle de s'enfuir par cet endroit en l'absence de la saillie sur l'extérieur de la surface externe de la semelle. Ainsi, on assure que la quantité de colle placé sur la surface externe de la semelle restera bien sous la semelle bien que la paroi interne de l'enveloppe pneumatique ait une forme concave. De ce fait, cette saillie garantit le volume global de colle présent sous la semelle. En effet, si l'encollage de la surface externe de la semelle est supérieur à ce qui est préconisé, le volume de colle moyen dépassera la hauteur de la saillie qui laissera alors échapper le surplus lors de l'opération de collage du dispositif de fixation sur la paroi interne du pneumatique. De plus, cette saillie lors de la phase d'encollage du dispositif de fixation permet un contrôle mécanique de la quantité de colle déposée sur le réseau homogène d'éléments en creux et d'éléments en saillie par un raclage de la colle déposée à l'aide d'un outil droit pouvant prendre appui sur la surface externe de la saillie.

Spécifiquement, la saillie sur le contour de la surface externe a une largeur inférieure à 500 µm.

Même si la surface externe de cette saillie, proportionnelle à la largeur de la saillie, ne contient pas de colle ou pas assez pour assurer une adhésion sécurisée de la saillie sur la paroi interne de l'enveloppe pneumatique, la dimension du réseau reste suffisante pour assurer la tenue mécanique du dispositif de fixation avec l'enveloppe pneumatique.

Spécifiquement, l'agencement du réseau des éléments en creux et des éléments en saillie étant concentrique, le volume de creux définie par le réseau est compris entre 30 mm³ et 120 mm³.

Avantageusement, la surface externe de la semelle comprend au moins 3 éléments en saillie.

Avantageusement, l'agencement du réseau des éléments en creux et des éléments en saillie étant sous forme d'un damier, le volume de creux défini par le réseau est compris entre 1 mm³ et 10 mm³.

L'invention porte aussi sur un arrangement d'une enveloppe pneumatique comprenant un sommet (S), deux flancs (F) s'étendant depuis le sommet (S) et se terminant par deux bourrelets (B) aptes à être liés à une roue et d'un dispositif de fixation dans lequel, le dispositif de fixation est fixé sur l'une des surfaces de l'enveloppe pneumatique, préférentiellement sur la paroi située la plus intérieurement de l'enveloppe pneumatique.

L'arrangement de l'enveloppe pneumatique et du dispositif de fixation est la destination du dispositif de fixation par nature. Ici, afin de préserver l'organe électronique destinée à être inséré dans le dispositif de fixation, il est préférable que le dispositif de fixation se situe à l'intérieur de la cavité fluidique délimitée par la paroi interne de l'enveloppe pneumatique et la jante de roue sur laquelle est montée l'enveloppe pneumatique.

Avantageusement, le dispositif de fixation est fixé au droit du sommet (S) de l'enveloppe pneumatique, préférentiellement sous un sillon situé vers l'extérieur du véhicule lorsque l'enveloppe pneumatique est montée sur un véhicule de transport.

Pour des fonctionnalités de mesure de la déformation de l'enveloppe pneumatique qui peuvent être observée sur les signaux de divers capteurs de l'organe électronique destiné à être introduit dans le dispositif de fixation, il est plus intéressant que le dispositif de fixation et de ce fait l'organe électronique associée soit situé au droit du sommet (S) de l'enveloppe pneumatique. Par exemple, un signal de capteur de choc ou d'accéléromètre selon la direction radiale permet de détecter l'aire de contact de l'enveloppe pneumatique avec le sol. Les informations associées à la longueur de l'aire de contact permettent d'estimer la charge statique portée par l'enveloppe pneumatique ainsi que sa vitesse de rotation instantanée. L'adhésion favorisée du dispositif de fixation avec la paroi interne de l'enveloppe pneumatique accroit qualitativement, voire quantitativement, l'estimation de ces paramètres de l'enveloppe pneumatique en améliorant la sensibilité des capteurs sensibles de l'organe électronique accueilli au sein du dispositif de fixation.

Très avantageusement, la partie de la paroi située la plus intérieurement à l'enveloppe pneumatique devant accueillir le dispositif de fixation comprend un réseau d'éléments en creux et d'éléments en saillie comprenant une variation maximale de hauteur comprise entre 10 µm et 100 µm.

La fait de constituer un premier réseau homogène d'éléments en creux et d'éléments en saillie au niveau de la surface externe de la semelle garantit une certaine quantité de colle à l'interface entre la surface externe de la semelle et la paroi interne de l'enveloppe pneumatique. Cependant, dans le cas, ou le volume de colle ainsi constitué n'est pas suffisant pour assurer la tenue mécanique de chaque plot de colle correspondant à un élément en creux, il peut être envisagée de compléter ce volume individuel par un second réseau homogène d'éléments en creux et d'éléments en saillie au niveau de la paroi de l'enveloppe pneumatique. De plus statistiquement, ce second réseau homogène peut créer des plots de liaison entre les deux composants au niveau des éléments en saillie de la surface externe de la semelle, ce qui rend plus uniforme le film de colle entre les deux éléments malgré la présence des deux réseaux homogènes.

Préférentiellement, ce second réseau homogène est effectué postérieurement à une étape de décapage de la paroi interne de l'enveloppe pneumatique au droit de la zone d'accueil du dispositif de fixation. Cela permet d'optimiser l'état de surface de la paroi interne de l'enveloppe pneumatique avant la fixation du dispositif de fixation. De plus, avantageusement, le second réseau homogène n'est pas l'image inverse du premier réseau homogène de la surface externe de la semelle. Si le premier réseau homogène est concentrique, il est judicieux que le second réseau soit plutôt un damier. Et si le premier réseau est un damier, il est judicieux que le second réseau homogène soit un damier dont chacune des deux directions ne coïncident pas avec l'une des directions du premier damier.

Avantageusement, la fixation dudit dispositif de fixation se fait par l'intermédiaire d'une colle comprise dans le groupe comprenant les cyanoacrylates et les silanes.

Pour des matériaux élastomériques de l'enveloppe pneumatique présentant une paroi interne relativement étanche à l'air, ces colles peuvent être employées en ayant une tenue mécanique compatibles avec ces dits matériaux pour ces sollicitations thermomécaniques subies de façon classique par une enveloppe pneumatique en service.

L'invention porte aussi sur un arrangement d'une enveloppe pneumatique et d'un dispositif de fixation fixée sur la paroi interne de l'enveloppe pneumatique dans lequel, un organe électronique est inséré dans le dispositif de fixation de l'arrangement.

Préférentiellement, l'enveloppe pneumatique de l'arrangement est montée sur une roue, préférentiellement dans un état gonflé.

C'est la finalité ultime du dispositif de fixation, c'est à-dire accueillir un organe électronique lorsque ce dispositif est fixé sur la paroi interne d'une enveloppe pneumatique. En effet, la fixation améliorée assurée par la structure spécifique du dispositif de fixation au niveau de la surface externe de la semelle garantit un niveau de signal exploitable au niveau des capteurs de l'organe électronique permettant de remonter à des informations intrinsèques à l'enveloppe pneumatique en fonctionnement sans être trop perturbée par la présence du dispositif de fixation.

### Description brève des dessins

L'invention sera mieux comprise à la lecture de la description qui va suivre donnée uniquement à titre d'exemple non limitatif et faite en se référant aux figures annexées dans lesquelles les mêmes numéros de référence désignent partout des parties identiques et dans lesquelles :
- La Fig. 1 présente une vue en perspective d'un dispositif de fixation d'un organe électronique à un pneumatique ;
- La Fig. 2 présente une vue de dessous et une vue de coté d'un même dispositif de fixation selon un premier mode de réalisation de l'invention ;
- La Fig. 3 présente une vue de dessous d'un dispositif de fixation dans un second mode de réalisation de l'invention
- La Fig. 4 présente une vue en perspective et en coupe d'une enveloppe pneumatique équipé d'un dispositif de fixation selon l'invention.

### Description détaillée de modes de réalisation

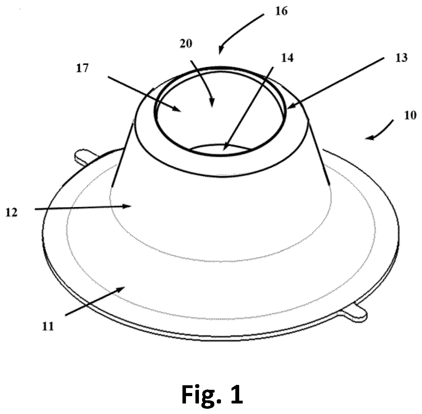

La Fig. 1 est une vue en perspective d'un dispositif de fixation 10 d'un organe électronique à une enveloppe pneumatique de l'état de la technique. Le dispositif de fixation 10 est ici de type ouvert , c'est-à-dire que l'insertion ou l'extraction de l'organe électronique du dispositif de fixation est réalisée par l'intermédire d'un orifice accesible même lorsque le dispositif de fication 10 est fixé sur l'enveloppe pneumatique. De ce fait, les opérations d'insertion ou d'extration de l'organe électronique du dispositif de fixation 10 peuvent avoir lieu directement sur l'enveloppe pneuamtique.

Ce dispositif de fixation 10 présente une semelle 11 dont la surface externe a pour fonction de se fixer à la surface d'une enveloppe pneumatique à l'aide de solutions techniques de l'état de l'art bien connu par l'Homme du métier. Le dispositif de fixation 10 est ici de révolution autour d'un axe de rotation perpendiculaire à la semelle 11. A cette semelle 11 est attenante une paroi de maintien 12, qui est fermée sur 360 degrés. Cette paroi de maintien 12 présente une ouverture 16 délimitée par un bord libre 13 de la paroi de maintien 12 du dispositif de fixation 10. L'orifice 16 ouvre sur un volume ouvert 20 délimité par la surface interne 14 de la semelle 11 et la surface interne 17 de la paroi de maintien 12. L'orifice 16 est déformable pour permettre l'insertion et l'extraction d'un organe électronique du volume ouvert 20. La propriété élastique du matériau de cette paroi de maintien 12 autorise cet agrandissement de l'orifice 16 pour les phases d'insertion et d'extraction. De plus, elle assure aussi un effort de maintien ou de serrage sur l'organe électronique lorsque celui-ci est logé dans le volume ouvert 20.

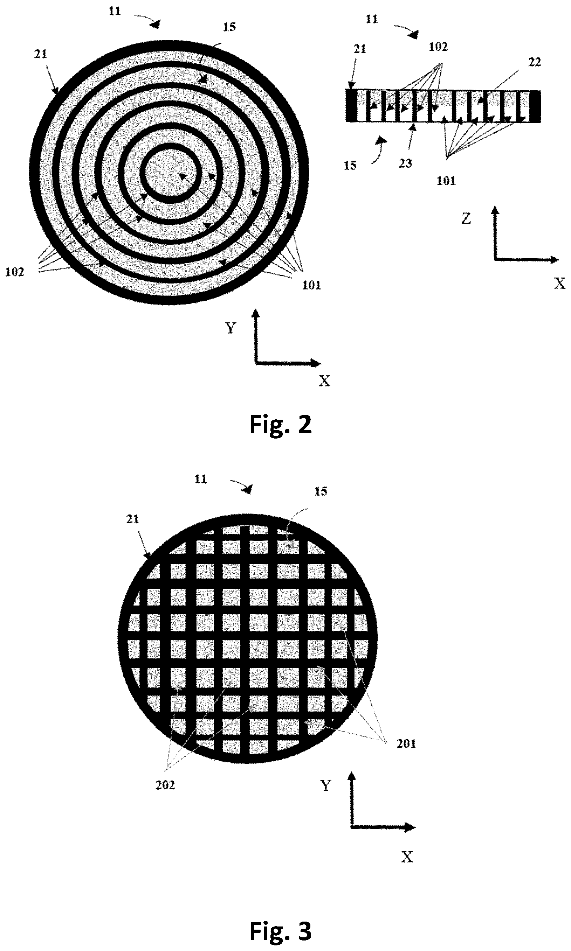

La Fig. 2 présente le réseau d'éléments en saillie et d'éléments en creux de la surface externe 15 de la semelle 11.

Ce réseau se présente sous une forme d'éléments concentrique autour d'un point central de la surface externe 15 de la semelle 11. Cela forme un réseau par nature homogène dans lequel, le volume de creux est équitableemnt réparti angulairement et radialement autour de ce point central. Plus le nombre d'alternance entre des éléments en creux 101 et les éléments en saillie 102 est élevé plus la répartition de creux est uniformément distribuée sur la surface externe 15 de la semelle 11. Ici, les éléments, aussi bien en saillie 102 et en creux 101, ont des dimensions identiques entre eux , selon leur type, en terme de largeur et de hauteur. Afin d'améliorer l'homogénéité de la distribution de colle au travers du réseau, la largeur des creux 101 pourrait être évolutive selon la distance radiale de l'élément de creux 101 par rapport au point central.

Le contour extérieur de la surface externe 15 de la semelle 11est constitué d'une saillie 21 dont la hauteur est inférieure ou égale à la hauteur maximale 23 des éléments en saillie 102 par rapport à la profondeur 22 des éléments en creux 101. Ainsi, cette saillie 21 constitue une barrière délimitant la colle à la surface externe 15 de la semelle 11. Cela assure que la colle présente entre la surface externe 15 de la semelle 11 et la paroi interne du pneumatique ne dépassera pas un certain volume. De plus, en maitrisant la quantité de colle appliquée sur la surface externe 15 de la semelle 11, on contrôle alors le volume de colle pour la liaison du dispositif de fixation 10 sur le pneumatique. Selon le type de colle employée pour la fixation du dispositif sur la paroi de l'enveloppe pneumatique et la nature de la rupture souhaitée de la liaison, il est possible d'ajuster la profondeur des éléments en creux 101 pour obtenir le bon type de rupture aussi bien en terme de localisation qu'en terme de seuil de déclenchement de la rupture.

La Fig. 3 représente le réseau d'éléments en saillie et d'éléments en creux de la surface externe 15 de la semelle 11 selon un second mode de réalisation.

Ce réseau se présente sous la forme d'un damier constituant en une alternance de cases en creux 201 et en saillie 202 de la surface externe 15 de la semelle 11. Cela forme un réseau par nature homogène dans lequel, le volume de creux est équitableemnt réparti sur la surface externe 15 de la semelle. Ici, les éléments, aussi bien en saillie 202 que en creux 201, ont des dimensions identiques en terme de dimension périphérique. Afin d'améliorer l'homogénéité de la distribution de colle au travers du réseau, il convient alors de diminuer la dimension intrinsèque des cases ce qui assure une plus grande finesse de distribution de la colle au niveau des cases. Ici le damier est obtenu à l'aide du passage selon deux directions perpendiculaires d'un objet métallique à la surface externe 15 de la semelle 11 pour une profondeur de creux élevée. Pour les profondeurs moins élevées, un traitement thermique de la surface externe 15 de la semelle à l'aide d'un rayon laser suivant un balayage rectiligne du laser par rapport à la surface externe 15 peut être envisagée. Il suffit alors de définir deux directions orthogonales de balayage du laser pour obtenir le damier orthogonale. Une étape de nettoyage de la surface externe 15 de la semelle est recommandée avant l'application de la colle. Bien entendu, il est possible de constituer un damier de losanges au lieu de rectangles. Pour autant, il est préférable que l'angle formé par les deux directions du damier fasse un angle d'au moins 30 degrés pour garantir une efficacité de nettoyage dans les angles les plus aigus du losange.

Le contour extérieur de la surface externe 15 de la semelle 11est constitué d'une saillie 21 dont la hauteur est inférieure ou égale à la hauteur maximale 23 des éléments en saillie 202 par rapport à la profondeur 22 des éléments en creux 201. Ainsi, cette saillie 21 constitue une barrière délimitant la colle à la surface externe 15 de la semelle 11. Cela assure que la colle présente entre la surface externe 15 de la semelle 11 et la paroi interne du pneumatique ne dépasse pas un certain volume. De plus, en maitrisant la quantité de colle appliquée sur la surface externe 15 de la semelle 11, on contrôle alors le volume de colle pour la liaison du dispositif de fixation 10 sur le pneumatique. Selon le type de colle employée pour la fixation du dispositif sur la paroi de l'enveloppe pneumatique et la nature de la rupture souhaitée de la liaison, il est possible d'ajuster la profondeur des éléments en creux 201 pour obtenir le bon type de rupture aussi bien en terme de localisation qu'en terme de seuil de déclenchement de la rupture.

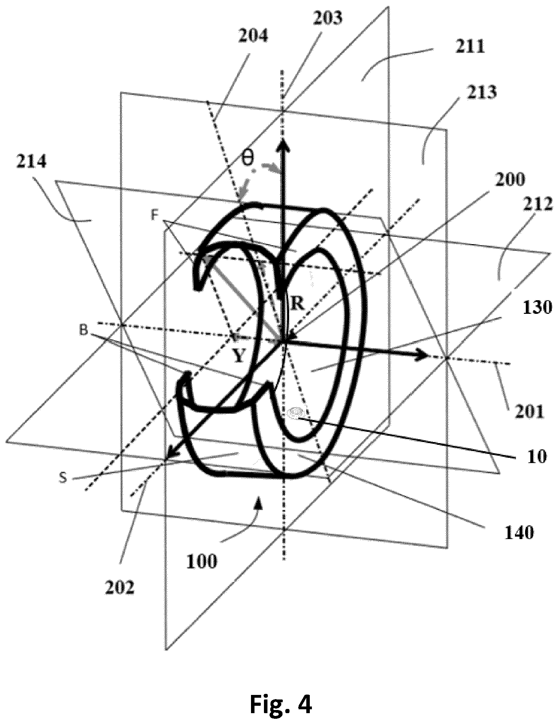

La Fig. 4 présente une coupe d'un bandage pneumatique 100, qui est aussi une enveloppe pneumatique, selon l'invention comprenant un sommet S prolongé par deux flancs F et se terminant par deux bourrelets B. En l'espèce, le pneumatique 100 est destiné à être monté sur une roue qui n'est pas représentée sur cette figure, au niveau des deux bourrelets B. On délimite ainsi une cavité fermée, contenant au moins un fluide sous pression, délimitée à la fois par la deuxième surface radialement intérieure 130 au bandage pneumatique 100 et par la surface externe de la roue. Le bandage pneumatique 100 comprend aussi une première surface 140 radialement externe au bandage pneumatique 100.

On notera l'axe de référence 201 correspondant à l'axe de référence ou axe naturel de rotation du bandage pneumatique 100 et le plan médian 211, perpendiculaire à l'axe de référence 201 et équidistant des deux bourrelets B. L'intersection de l'axe de référence 201 par le plan médian 211 détermine le centre du bandage pneumatique 200. On définira un repère cartésien au centre du bandage pneumatique 200 constitué de l'axe de référence 201, d'un axe vertical 203 perpendiculaire au sol et d'un axe longitudinal 202 perpendiculaire aux deux autres axes. Et, on définira le plan axial 212 passant par l'axe de référence 201 et l'axe longitudinal 202, parallèle au plan du sol et perpendiculaire au plan médian 211 Enfin on appellera plan vertical 213, le plan perpendiculaire à la fois au plan médian 211 et au plan axial 212 passant par l'axe vertical 203.

Tout point matériel du bandage pneumatique 100 est défini de façon unique par ses coordonnées cylindriques (Y, R, θ). Le scalaire Y représente la distance axiale au centre du bandage pneumatique 200 dans la direction de l'axe de référence 201 définie par la projection orthogonale du point matériel du pneumatique 100 sur l'axe de référence 201. On définira un plan radial 214 faisant un angle θ par rapport au plan vertical 213 autour de l'axe de référence 201. Le point matériel du bandage pneumatique 100 est repéré dans ce plan radial 214 par la distance R au centre du bandage pneumatique 200 dans la direction perpendiculaire à l'axe de référence 201 identifiée par la projection orthogonale de ce point matériel sur l'axe radial 204. Le vecteur unitaire perpendiculaire au plan radial 214 et formant un trièdre direct avec les vecteurs unitaires des directions axiale 201 et radiale 204 représente la direction circonférentielle de l'enveloppe pneumatique 100.

Ce pneumatique 100 présente sur la surface radialement intérieure 130 un dispositif de fixation 10 qui est fixé la surface 130 par collage selon les techniques usuels de l'état de la technique lorsque le dispositif de fixation est en matériau élastomère. Le dispositif de foxation 10 est fixé au droit du sommet S de l'enveloppe pneumatique 100, ce qui améliore son endurance puisque le dispositif de fixation 10 ainsi positionné procure moins de soucis lors des opérations de montage ou démontage de la roue sur l'enveloppe pneumatique 100. En effet, le dispositif de fixation 10 est situé dans une zone éloignée des bourrelets B de l'enveloppe pneumatique 100. Ici, le dispositif de fixation 10 est équipé d'un organe électronique au sein de son volume ouvert qui constitue un logement adapté à recevoir l'organe électronique. De ce fait, l'enveloppe pneumatique100 est ici prête à être montée sur une roue pour constituer un ensemble monté. L'organe électronique peut délivrer diverses fonctions comme l'identification de certains composants comme l'organe électronique lui-même, le pneumatique. Mais l'organe électronique peut aussi être équipé d'un capteur de pression et/ou de température afin d'évaluer la pression de gonflge de l'ensemble monté. Enfin, il peut aussi être équipé de capteur mesurant directement la courbure de l'enveloppe pneumatique comme un accéléromètre ou un flexomètre permettant de remonter à des gradeurs d'usage du pneumatique comme la vitesse angulaire, le kilomètrage parcouru, la charge statique appliquée. L'ensemble de ces grandeurs permet d'identifier des performances de l' enveloppe pneumatique comme par exemple, son usure, son adhèrence ou des grandeurs intrinséques du sol sur lequel l'enveloppe pneumatique roule.

## Revendications

1. Dispositif de fixation (10) à une paroi d'une enveloppe pneumatique d'un organe électronique comprenant :
- une semelle (11) apte à être fixée à la paroi de l'enveloppe pneumatique par l'intermédiaire d'une surface externe (15);
- une paroi de maintien (12) fermée, apte à retenir le dit organe électronique, s'étendant depuis la semelle (11) jusqu'à un bord libre (13) et définissant avec ladite semelle (11) un volume (20) ouvert ;
- le volume (20), apte à accueillir au moins une partie dudit organe électronique, étant défini par une surface interne (14) de ladite semelle (11) et par ladite paroi de maintien (12), présentant une ouverture (16) délimitée par le bord libre (13) de ladite paroi de maintien (12), apte à se déformer pour introduire ou extraire ledit organe électronique dudit volume (20) ;
- la surface externe (15) de ladite la semelle (11) comprenant un réseau homogène d'élements en creux (101, 201) et d'élements en saillie (102, 202) définissant une variation maximale de hauteur comprise entre 10 µm et 200 µm ; et
**caractérisé en ce que** l'agencement du réseau des éléments en creux (101) et des éléments en saillie (102) est concentrique autour d'un unique point de la surface externe (15) de la semelle (11) ou sous forme d'un damier dont les carreaux adjacents deux à deux sont un élement en creux (201) et un élement en saillie (202).

2. Dispositif de fixation (10) selon la revendication 1, dans lequel la largeur des éléments en creux (101, 201) entre deux éléments en saillie (102, 202) est comprise entre 500 µm et 1500 µm.

3. Dispositif de fixation (10) selon l'une des revendications 1 à 2, dans lequel le contour de la surface externe (15) de la semelle (11) comprend une saillie (21) dont la hauteur est inférieure ou égale à la hauteur maximale (23) des éléments en saillie (102, 202) du réseau homogène de la surface externe (15) de la semelle (11).

4. Dispositif de fixation (10) selon la revendication 3, dans lequel la saillie (21) sur le contour de la surface externe (15) a une largeur inférieure à 500 µm.

5. Dispositif de fixation (10) selon l'une quelconque des revendications 1 à 4, dans lequel, l'agencement du réseau des éléments en creux (101) et des éléments en saillie (102) étant concentrique, le volume de creux définie par le réseau est compris entre 30 mm³ et 120 mm³.

6. Dispositif de fixation (10) selon la revendication 5 dans lequel la surface externe (15) de la semelle (11) comprend au moins 3 éléments en saillie (102).

7. Dispositif de fixation (10) selon l'une des revendications 1 à 4 dans lequel, l'agencement du réseau des éléments en creux (101) et des éléments en saillie (102) étant sous forme d'un damier, le volume de creux défini par le réseau est compris entre 1 mm³ et 10 mm³.

8. Arrangement d'une enveloppe pneumatique (100) comprenant un sommet (S), deux flancs (F) s'étendant depuis le sommet (S) et se terminant par deux bourrelets (B) aptes à être liés à une roue et d'un dispositif de fixation (10) selon l'une des revendications 1 à 7 dans lequel, le dispositif de fixation (10) est fixé sur l'une des surfaces de l'enveloppe pneumatique, préférentiellement sur la paroi située la plus intérieurement de l'enveloppe pneumatique (100).

9. Arrangement selon la revendication 8 dans lequel, le dispositif de fixation (10) est fixé au droit du sommet (S) de l'enveloppe pneumatique (100).

10. Arrangement selon l'une quelconque des revendications 8 à 9 dans lequel la partie de la paroi située la plus intérieurement à l'enveloppe pneumatique (100) devant accueillir le dispositif de fixation (10) comprend un réseau d'élements en creux et d'élements en saillie comprenant une variation maximale de hauteur comprise entre 10 µm et 100 µm.

11. Arrangement selon l'une quelconque des revendications 8 à 10 dans lequel la fixation dudit dispositif de fixation (10) se fait par l'intermédiaire d'une colle comprise dans le groupe comprenant les cyanoacrylates et les silanes.

12. Arrangement selon l'une des revendications 8 à 11 dans lequel un organe électronique est inséré dans le dispositif de fixation (10) de l'arrangement.

13. Arrangement selon l'une des revendications 8 à 12 dans lequel l'enveloppe pneumatique (100) de l'arrangement est montée sur une roue, préférentiellement dans un état gonflé.

## Patentansprüche

1. Befestigungsvorrichtung (10) zur Befestigung eines elektronischen Organs an einer Wand eines Luftreifens, umfassend:
- eine Sohle (11), die geeignet ist, über eine Außenfläche (15) an der Wand des Luftreifens befestigt zu werden;
- eine geschlossene Haltewand (12), die geeignet ist, das elektronische Organ zu halten, sich von der Sohle (11) bis zu einem freien Rand (13) erstreckt und mit der Sohle (11) ein offenes Volumen (20) definiert,
- wobei das Volumen (20), das geeignet ist, wenigstens einen Teil des elektronischen Organs aufzunehmen, durch eine Innenfläche (14) der Sohle (11) und durch die Haltewand (12) definiert wird und eine durch den freien Rand (13) der Haltewand (12) begrenzte Öffnung (16) aufweist, die geeignet ist, sich zu verformen, um das elektronische Organ in das Volumen (20) einzuführen oder aus ihm herauszuziehen;
- wobei die Außenfläche (15) der Sohle (11) ein homogenes Netz aus vertieften Elementen (101, 201) und erhabenen Elementen (102, 202) umfasst, die eine maximale Höhenvariation zwischen 10 µm und 200 µm definieren; und **dadurch gekennzeichnet, dass** die Anordnung des Netzes aus vertieften Elementen (101) und erhabenen Elementen (102) konzentrisch um einen einzigen Punkt der Außenfläche (15) der Sohle (11) ist oder in Form eines Schachbretts vorliegt, dessen benachbarte Kacheln paarweise ein vertieftes Element (201) und ein erhabenes Element (202) sind.

2. Befestigungsvorrichtung (10) nach Anspruch 1, wobei die Breite der vertieften Elemente (101, 201) zwischen zwei erhabenen Elementen (102, 202) zwischen 500 µm und 1500 µm beträgt.

3. Befestigungsvorrichtung (10) nach einem der Ansprüche 1 bis 2, wobei die Kontur der Außenfläche (15) der Sohle (11) eine Erhebung (21) umfasst, deren Höhe kleiner oder gleich der maximalen Höhe (23) der erhabenen Elemente (102, 202) des homogenen Netzes der Außenfläche (15) der Sohle (11) ist.

4. Befestigungsvorrichtung (10) nach Anspruch 3, wobei die Erhebung (21) an der Kontur der Außenfläche (15) eine Breite von weniger als 500 µm aufweist.

5. Befestigungsvorrichtung (10) nach einem der Ansprüche 1 bis 4, wobei, wenn die Anordnung des Netzes aus vertieften Elementen (101) und erhabenen Elementen (102) konzentrisch ist, das durch das Netz definierte Hohlraumvolumen zwischen 30 mm³ und 120 mm³ beträgt.

6. Befestigungsvorrichtung (10) nach Anspruch 5, wobei die Außenfläche (15) der Sohle (11) mindestens 3 erhabene Elemente (102) umfasst.

7. Befestigungsvorrichtung (10) nach einem der Ansprüche 1 bis 4, wobei, wenn die Anordnung des Netzes aus vertieften Elementen (101) und erhabenen Elementen (102) in Form eines Schachbretts vorliegt, das durch das Netz definierte Hohlraumvolumen zwischen 1 mm³ und 10 mm³ beträgt.

8. Anordnung aus einem Luftreifen (100), der einen Gürtel (S), zwei Seitenwände (F), die sich von dem Gürtel (S) aus erstrecken und in zwei Wülsten (B) enden, die geeignet sind, mit einem Rad verbunden zu werden, umfasst, und aus einer Befestigungsvorrichtung (10) nach einem der Ansprüche 1 bis 7, wobei die Befestigungsvorrichtung (10) an einer der Flächen des Luftreifens befestigt ist, vorzugsweise an der radial innersten Fläche des Luftreifens (100).

9. Anordnung nach Anspruch 8, wobei die Befestigungsvorrichtung (10) direkt unter dem Gürtel (S) des Luftreifens (100) befestigt ist.

10. Anordnung nach einem der Ansprüche 8 bis 9, wobei der am weitesten innen gelegene Teil der Wand des Luftreifens (100), der die Befestigungsvorrichtung (10) aufnehmen soll, ein Netz aus vertieften Elementen und erhabenen Elementen umfasst, die eine maximale Höhenvariation zwischen 10 µm und 100 µm umfassen.

11. Anordnung nach einem der Ansprüche 8 bis 10, wobei die Befestigung der Befestigungsvorrichtung (10) mittels eines Klebstoffs erfolgt, der in der die Cyanoacrylate und die Silane umfassenden Gruppe enthalten ist.

12. Anordnung nach einem der Ansprüche 8 bis 11, wobei ein elektronisches Organ in die Befestigungsvorrichtung (10) der Anordnung eingesetzt ist.

13. Anordnung nach einem der Ansprüche 8 bis 12, wobei der Luftreifen (100) der Anordnung auf einem Rad montiert ist, vorzugsweise in einem aufgepumpten Zustand.

## Claims

1. Device (10) for securing an electronic member to a wall of a tyre casing, comprising:
- a base (11) that is able to be secured to the wall of the tyre casing via an external surface (15);
- a closed retaining wall (12), which is able to retain said electronic member, extending from the base (11) as far as a free edge (13) and defining an open volume (20) with said base (11);
- the volume (20), which is able to accommodate at least a part of said electronic member, being defined by an internal surface (14) of said base (11) and by said retaining wall (12), having an opening (16) delimited by the free edge (13) of said retaining wall (12), which is able to deform for the insertion or extraction of said electronic member into or from said volume (20);
- the external surface (15) of said base (11) comprising a homogenous array of recessed elements (101, 201) and protruding elements (102, 202) defining a maximum variation in height of between 10 µm and 200 µm; and
**characterized in that** the arrangement of the array of the recessed elements (101) and protruding elements (102) is concentric about a single point of the external surface (15) of the base (11) or in the form of a chequerboard of which the pairwise adjacent tiles are a recessed element (201) and a protruding element (202).

2. Securing device (10) according to Claim 1, wherein the width of the recessed elements (101, 201) between two protruding elements (102, 202) is between 500 µm and 1500 µm.

3. Securing device (10) according to either of Claims 1 and 2, wherein the contour of the external surface (15) of the base (11) comprises a protrusion (21) of which the height is less than or equal to the maximum height (23) of the protruding elements (102, 202) of the homogenous array of the external surface (15) of the base (11).

4. Securing device (10) according to Claim 3, wherein the protrusion (21) on the contour of the external surface (15) has a width of less than 500 µm.

5. Securing device (10) according to any one of Claims 1 to 4, wherein, since the arrangement of the array of the recessed elements (101) and protruding elements (102) is concentric, the voids volume defined by the array is between 30 mm³ and 120 mm³.

6. Securing device (10) according to Claim 5, wherein the external surface (15) of the base (11) comprises at least 3 protruding elements (102).

7. Securing device (10) according to one of Claims 1 to 4, wherein, since the arrangement of the array of the recessed elements (101) and protruding elements (102) is in the form of a chequerboard, the voids volume defined by the array is between 1 mm³ and 10 mm³.

8. Arrangement of a tyre casing (100) comprising a crown (S), two sidewalls (F) extending from the crown (S) and terminating in two beads (B) that are able to be connected to a wheel, and of a securing device (10) according to one of Claims 1 to 7, wherein the securing device (10) is secured to one of the surfaces of the tyre casing, preferentially to the wall situated furthest towards the inside of the tyre casing (100).

9. Arrangement according to Claim 8, wherein the securing device (10) is secured in line with the crown (S) of the tyre casing (100).

10. Arrangement according to either one of Claims 8 and 9, wherein the part of the wall situated furthest towards the inside of the tyre casing (100) that has to accommodate the securing device (10) comprises an array of recessed elements and protruding elements comprising a maximum variation in height of between 10 µm and 100 µm.

11. Arrangement according to any one of Claims 8 to 10, wherein the securing device (10) is secured via an adhesive contained in the group comprising cyanoacrylates and silanes.

12. Arrangement according to one of Claims 8 to 11, wherein an electronic member is inserted into the securing device (10) of the arrangement.

13. Arrangement according to one of Claims 8 to 12, wherein the tyre casing (100) of the arrangement is mounted on a wheel, preferentially in an inflated state.
